# FASCICULE DE BREVET EUROPEEN

(11) **EP 3 625 071 B1**
(45) Date de publication et mention de la délivrance du brevet: **02.06.2021**
(21) Numéro de dépôt: 18720330.2
(22) Date de dépôt: 13.04.2018
(51) Int. Cl.: B60J 5/04

(54) **TRAVERSE A GUIDAGE DE FIXATION INTEGREE**
QUERTRÄGER MIT INTEGRIERTER BEFESTIGUNGSFÜHRUNG
CROSS-MEMBER WITH INTEGRATED FIXING GUIDE

(30) Priorité: 19.05.2017 FR 1754428
(43) Date de publication de la demande: 25.03.2020
(73) Titulaire: PSA Automobiles SA, 78300 Poissy (FR)
(72) Inventeur: PAUL, Etienne, 91460 Marcoussis (FR)
(86) Numéro de dépôt international: PCT/FR2018/050937
(87) Numéro de publication internationale: WO 2018/211188

(56) Documents cités:
- EP-A1- 2 949 514
- DE-A1-102005 014 570
- DE-U1-202015 102 898
- JP-A- S57 158 119
- JP-U- S5 838 021
- US-A1- 2006 017 306
- US-B1- 9 610 829

## Description

L'invention concerne une traverse longitudinale de renfort de porte et une porte équipée d'une telle traverse.

Il est connu de réaliser une porte latérale de véhicule comportant un caisson formé par un panneau extérieur fixé à un panneau intérieur formant une doublure de porte et une partie fenêtre située au-dessus du caisson. Une traverse longitudinale de renfort s'étend dans le caisson entre les deux bords latéraux de ladite porte. Elle est fixée au panneau intérieur, et s'étend sensiblement à proximité du bord supérieur du panneau intérieur formant le bord avec la partie fenêtre.

Par exemple, le brevet EP2014494 décrit une porte comportant un panneau extérieur fixé à un panneau intérieur, définissant entre eux un caisson. Une traverse longitudinale est fixée au panneau intérieur le long du bord supérieur dudit panneau intérieur à proximité de la partie fenêtre de la porte, sur la face du panneau intérieur en regard avec le panneau extérieur. La traverse s'étend d'un bord latéral à l'autre du caisson. La traverse comporte des trous de réception permettant de fixer des équipements à la porte. Une fois que le panneau extérieur est fixé au panneau intérieur, ces trous sont accessibles uniquement en passant par l'intérieur du caisson, par une ouverture d'accès dans le panneau intérieur. L'accessibilité et la visibilité à l'intérieur dudit caisson pour fixer des équipements sur la traverse est difficile, en particulier lorsque les ouvertures d'accès dans ledit panneau intérieur sont de petites tailles et décalées par rapport à la traverse. Il est alors difficile pour un ouvrier en usine de fixer correctement et rapidement un équipement sur ladite traverse.

Le document EP 2949514 A1 divulgue une porte selon le préambule de la revendication 1.

L'objectif de l'invention est de remédier à ces inconvénients. En particulier, un des buts de l'invention est de proposer une traverse longitudinale de porte sur laquelle on peut fixer facilement et rapidement des équipements. Un autre objectif est d'offrir des moyens pour guider l'opérateur de sorte qu'il puisse fixer ces équipements à la traverse sans avoir besoin de voir la zone de fixation.

Ce but est atteint selon l'invention, grâce à une porte de véhicule comportant une partie fenêtre située au-dessus d'une partie caisson, un panneau extérieur et un panneau intérieur formant ledit caisson, et une traverse dans le caisson, ladite traverse comportant un trou de réception pour fixer un équipement et deux reliefs longilignes formant un couloir de guidage entre eux, au moins une partie du trou de réception étant dans l'alignement dudit couloir de guidage, le panneau intérieur comprenant en outre une ouverture d'accès pour accéder à l'intérieur du caisson, de préférence décalée par rapport à la traverse, caractérisée en ce que la porte comporte dans la partie fenêtre un cadre avec deux montants latéraux, une antenne de réception d'ondes électromagnétiques fixée sur l'un des montants latéraux et alimentée par un faisceau électrique, ledit faisceau comportant un connecteur fixé à la traverse par une interface de fixation coopérant avec le trou de fixation.

Ainsi, avantageusement, le couloir formé par les reliefs permet d'aider un opérateur à trouver le trou de réception pour fixer l'équipement. En effet, en faisant glisser, à la main, l'équipement contre la traverse, l'opérateur ressent facilement les reliefs. Une fois qu'il a positionné l'équipement entre les reliefs, il lui suffit de se laisser guider, par le couloir créé par ces deux reliefs, jusqu'au trou de réception pour fixer l'équipement à la traverse. L'opérateur n'a donc pas besoin de voir le trou de réception et la position de sa main pour réussir à fixer rapidement et facilement l'équipement sur la traverse à l'aide dudit trou de réception. De plus, même si l'ouverture d'accès est éloignée de la traverse et ne permet pas de voir la position du trou de réception, un opérateur pourra facilement trouver la position du trou de réception et fixer un équipement à ce trou de réception en étant guidé par les sensations du toucher obtenues grâce aux reliefs. Les possibilités de forme et de position du trou d'accès sont augmentées.

Dans un mode de réalisation préférée de l'invention, les deux reliefs s'étendent depuis l'un des bords longitudinaux de ladite traverse de sorte que l'une des extrémités du couloir est sur ledit bord longitudinal, l'autre extrémité étant en vis-à-vis du trou de réception.

Ainsi, avantageusement, l'identification de la position du couloir est facile pour l'opérateur. En effet, il suffit à l'opérateur de trouver le bord longitudinal de la traverse et de le parcourir en le touchant des doigts pour détecter, par le toucher, la position de l'extrémité du couloir de guidage débouchant sur ce bord longitudinal de la traverse, puis d'utiliser ledit couloir comme guide vers le trou de réception. Par exemple, le couloir peut est orienté dans une direction différente de la direction longitudinale de la traverse.

Dans un autre mode de réalisation de l'invention, le trou de réception est de forme allongée dans une direction longitudinale et comporte une première partie et une deuxième partie alignées suivant ladite direction longitudinale du trou de réception, communiquant entre-elles de sorte à former un unique trou, la première partie étant plus large que la deuxième partie, la largeur étant la dimension dans une direction perpendiculaire à la direction longitudinale du trou de réception,

Le trou de réception a donc deux zones de largeurs différentes. Ainsi avantageusement, une fois que l'opérateur a trouvé le trou de réception, il introduit une partie de l'équipement faisant interface de fixation dans la première partie du trou de réception, puis il lui suffit de translater l'équipement de manière à ce que l'interface de fixation de l'équipement soit déplacée dans la deuxième partie du trou de réception. La largeur de la première partie du trou de réception permet une introduction aisée de l'interface de fixation dans ladite première partie, tandis que la largeur inférieure de la deuxième partie du trou de réception permet d'obtenir une fixation de l'équipement par une coopération avec l'interface de fixation et les contours de la deuxième partie du trou de réception, à la manière d'une boutonnière.

Dans un autre mode de réalisation de l'invention, la première partie du trou de réception est de forme oblongue orientée suivant la direction longitudinale du trou de réception. Dans un autre mode de réalisation de l'invention, la deuxième partie du trou de réception de forme oblongue orientée suivant la direction longitudinale du trou de réception. Dans un autre mode de réalisation, la première partie et la deuxième partie du trou de réception sont toutes les deux de forme oblongue orientée suivant la même direction longitudinale du trou de réception.

Dans un mode de réalisation préférée de l'invention, la direction longitudinale du trou de réception est sensiblement parallèle à l'axe longitudinal de la traverse.

Ainsi avantageusement, l'opérateur peut plus facilement trouver la direction de la translation à réaliser pour passer de la première partie à la deuxième partie du trou de réception pour fixer l'équipement, la direction de la translation étant sensiblement parallèle à l'axe longitudinal de la traverse et la direction de la traverse étant facilement détectable par l'opérateur par le toucher ou par connaissance de la géométrie de la porte.

Dans un autre mode de réalisation de l'invention, la largeur du trou de réception à l'intersection entre la première partie et la deuxième partie dudit trou de réception est de largeur inférieure à la largeur de ladite deuxième partie du trou de réception, la largeur étant la dimension du trou dans une direction perpendiculaire à la direction longitudinale du trou de réception.

Ainsi, avantageusement, lors du déplacement depuis la première partie vers la deuxième partie du trou de réception de l'interface de fixation de l'équipement introduite dans ledit trou de réception, le passage de cette intersection crée un effort résistant à la translation de cette interface de fixation, informant l'opérateur du passage de l'interface de fixation dans ladite deuxième partie. De plus, cette réduction de largeur à l'intersection entre la première partie et la deuxième partie du trou de réception permet de maintenir l'interface de fixation de l'équipement dans la deuxième partie du trou de réception.

Dans un mode de réalisation préféré de la porte, la traverse s'étend d'un bord latéral à l'autre du caisson.

Dans un autre mode de réalisation de la porte, la traverse est de forme sensiblement plane, et le plan général de la traverse est positionné parallèlement au plan général vertical de la porte, dans le référentiel du véhicule lorsque la porte est installée sur un véhicule.

Dans un autre mode de réalisation de la porte, la traverse est le long du bord dudit caisson, dit bord supérieur, situé le long de la partie fenêtre, et l'ouverture d'accès est située plus bas que la traverse, suivant la direction verticale en se plaçant dans le référentiel du véhicule lorsque la porte est installée sur un véhicule, et est agencée de sorte que le bras d'un opérateur puisse rentrer dans le caisson pour atteindre le trou de fixation.

Ainsi, même dans la partie du caisson située le long du bord supérieur dudit caisson, dans laquelle les accès sont difficiles et où il est compliqué de créer des ouvertures pour apporter de la visibilité à un opérateur, il est possible de fixer sans difficulté un équipement sur la traverse. La traverse ainsi positionnée forme une traverse longitudinale dans la porte.

L'invention porte aussi sur un véhicule comportant une traverse telle que décrite précédemment ou comportant une porte telle que décrite précédemment.

L'invention sera mieux comprise à la lecture de la description qui va suivre, donnée uniquement à titre d'exemple et faite en se référant aux dessins annexés, sur lesquels :
- la figure 1 est une vue d'une porte de véhicule depuis l'extérieur du véhicule, sans le panneau extérieur,
- la figure 2 est une vue en section A-A de la porte,
- la figure 3 est une vue détaillée d'une partie de la traverse de la porte de la figure 1,
- la figure 4 est une vue de la section B-B de la figure 3.

Les dessins sont des représentations schématiques pour faciliter la compréhension de l'invention. Les composants ne sont pas forcément représentés à l'échelle. Les mêmes références correspondent aux mêmes composants d'une figure à l'autre.

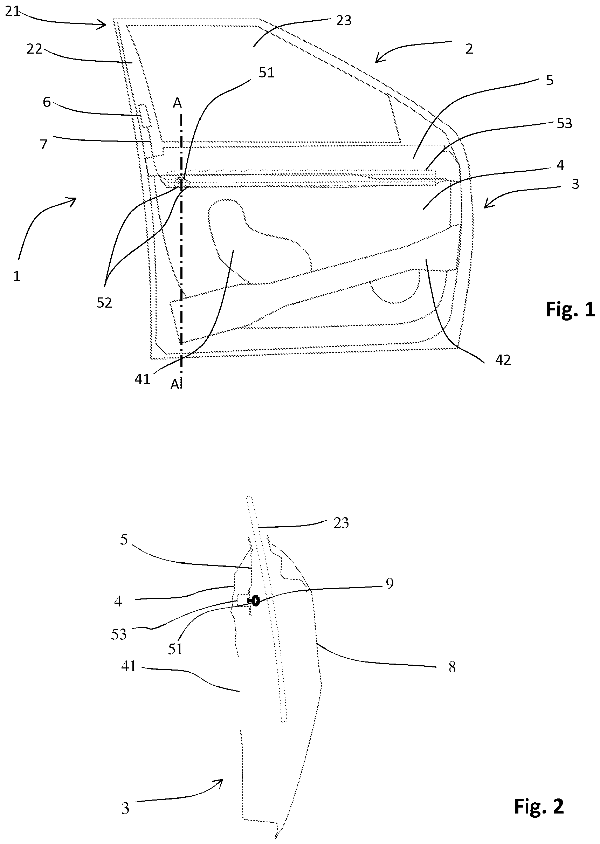

La figure 1 montre une porte latérale 1 de véhicule, plus particulièrement une porte avant, comportant une partie fenêtre 2 et un caisson 3. Le caisson 3 est formé d'un panneau intérieur 4 et d'un panneau extérieur 8 (représenté en figure 2). Dans la figure 1, la porte 1 est montrée sans le panneau extérieur 8 afin d'avoir une vue plus claire de l'intérieur du caisson 3. Le panneau intérieur 4 comporte un bord supérieur situé le long de la partie fenêtre 2. Une traverse longitudinal 5 s'étend d'un bord latéral à l'autre du caisson 3, à l'intérieur dudit caisson 3. La traverse 5 est de forme longiligne, suivant une direction longitudinale sensiblement parallèle au bord supérieur du panneau intérieur 4. La traverse 5 comporte un trou de réception 51 et deux reliefs 52. La partie fenêtre 2 comporte un cadre 21 de fenêtre encadrant une ouverture destinée à recevoir une vitre 23. Une partie du cadre 21 est relié au bord supérieur du panneau intérieur 4, sur l'un des bords latéraux de la porte 1, et s'étend sensiblement perpendiculairement à la direction longitudinale de la traverse 5, formant un montant 22 de fenêtre. Une antenne 6 est fixée sur ledit montant 22. Un faisceau 7 alimente cette antenne 6 et descend dans le caisson 3. L'extrémité libre du faisceau 7, c'est-à-dire l'extrémité dudit faisceau 7 non reliée à l'antenne 6, comporte un connecteur 9 fixé à la traverse 5 en coopérant avec le trou de réception 51. Le panneau intérieur 4 comporte une ouverture d'accès 41 éloignée des bords dudit panneau intérieur 4, et en particulier du bord supérieur dudit panneau intérieur 4. Cette ouverture d'accès 41 permet de faire passer des équipements à l'intérieur du caisson 3, comme par exemple un système de lève-vitre ou un système de serrure, lorsque le panneau extérieur 8 est déjà fixé au panneau intérieur 4, et d'accéder à l'intérieur du caisson 3. Le panneau intérieur 4 peut comporter d'autres ouvertures, comme par exemple une ouverture ronde pour un haut-parleur.

L'antenne 6 est par exemple une antenne 6 de réception et/ou d'émission pour communiquer avec une télécommande permettant par exemple le verrouillage et le déverrouillage du véhicule.

La porte 1 illustrée en figure 1 comporte en outre une traverse de renfort de choc latérale 42 s'étendant en diagonal d'un bord à l'autre de la porte 1, en partie basse du caisson 3, c'est-à-dire à l'opposé de la partie fenêtre 2.

La figure 2 montre le caisson 3 suivant la section AA de la figure 1. Le caisson 3 est formé par le panneau extérieur 8 et le panneau intérieur 4. La vitre 23, représentée en pointillée, peut descendre dans le caisson 3, entre le panneau extérieur 8 et le panneau intérieur 4. On définit par côté intérieur du caisson 3 la partie du caisson 3 située du côté du panneau intérieur 4 par rapport à la vitre 23 en position descendue dans le caisson 3, et côté extérieur du caisson 3 la partie du caisson 3 située du côté du panneau extérieur 8, toujours par rapport à la vitre 23 en position descendue dans le caisson 3. La traverse 5 est disposée dans le caisson 3, du côté intérieur dudit caisson 3. Elle est de forme sensiblement plane, dont le plan s'étend approximativement verticalement, la direction verticale étant définie suivant l'axe vertical du véhicule lorsque la porte 1 est installée sur un véhicule. La traverse 5 comporte donc une face intérieure orientée du côté intérieur, c'est-à-dire du côté du panneau intérieur 4, et une face extérieure orientée du coté extérieur, c'est-à-dire du côté du panneau extérieur 8 et de la vitre 23 en position descendue. Une partie du faisceau 7, non représenté en figure 2, passe le long de la face extérieure de la traverse 5. Le connecteur 9 situé à l'extrémité libre du faisceau 7 se fixe sur la traverse 5 dans le trou de réception 51, et est positionné sur la face extérieure de la traverse 5. Il comporte une interface de fixation coopérant avec ledit trou de réception 51. Cette interface de fixation entre dans le trou de réception 51 par la face extérieure de la traverse 5. La traverse 5 comporte un profilé de renfort 53 fixé sur la face intérieure de ladite traverse 5, et s'étendant approximativement sur la majeur partie de la longueur de ladite traverse 5. Le profilé de renfort 53 a une section transversale en U, est fixé à la traverse 5 par les extrémités du U de manière à former un corps creux avec ladite traverse 5. C'est-à-dire que la traverse 5 ferme le U. Le profilé de renfort 53 permet de renforcer la traverse 5. Le profilé de renfort 53 est disposée de manière à être en vis-à-vis du trou de réception 51, le trou de réception 51 débouchant dans le corps creux, entre les deux branches de la section en U dudit profilé de renfort 53. L'accès au trou de réception 51 ne peut donc être réalisé que par la face extérieure de la traverse 5. En variante, le profilé de renfort 53 peut être de forme différente. En autre variante, la porte 1 ne comporte pas de profilé de renfort 53 fixé sur la traverse 5.

Comme illustré en figures 1 et 2, l'ouverture d'accès 41 est située plus bas que la traverse 5, et n'est pas en vis-à-vis avec ladite traverse 5.

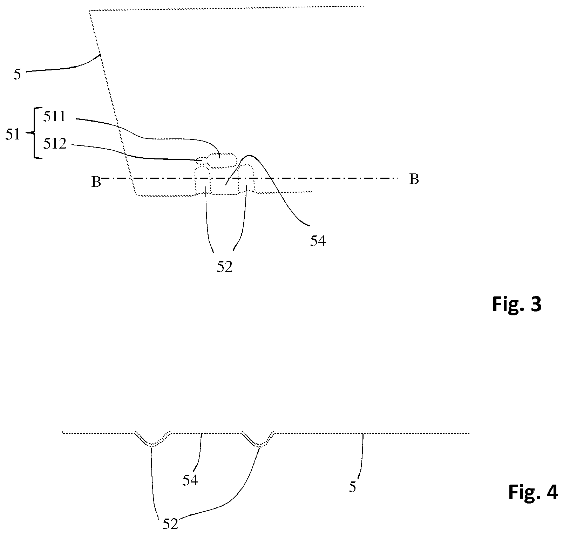

Pour accéder au trou de réception 51 et fixer le connecteur 9 lorsque le panneau extérieur 8 est fixé au panneau intérieur 4, un opérateur doit passer son bras dans l'ouverture d'accès 41, puis prend le connecteur 9 à l'extrémité libre du faisceau 7, chercher le trou de réception 51 en passant du côté de la face extérieure de la traverse 5, sans aucune visibilité car la traverse 5 est située derrière le panneau intérieur 4 et le trou de réception 51 est situé derrière le profilé de renfort 53, ledit profilé de renfort 53 interdisant l'accès au trou de réception 51 par la face intérieure de la traverse 5. Comme illustrer en figure 3, afin de guider le mouvement de l'opérateur, les deux reliefs 52 situés sur la traverse 5 sont de forme longiligne, c'est-à-dire en ligne droite, parallèles entre eux, et en saillie du côté de la face extérieure de la traverse 5, définissant un couloir 54 dans l'espace situé entre lesdits reliefs 52. La hauteur des reliefs 52, correspondant à la hauteur de la saillie des reliefs 52 par rapport au reste de la face extérieure de la traverse 5, est suffisamment haute pour permettre à l'opérateur de sentir, par le toucher et à la main, le guidage du connecteur 9 par lesdits reliefs 52. Par exemple, la hauteur des reliefs 52 est supérieure à 5 millimètres. D'autres dimensions peuvent être choisies, par exemple en fonction de l'équipement à fixer ou en fonction du fait que l'opérateur porte ou non des gants. Les deux reliefs 52 s'étendent depuis le bord longitudinal de la traverse 5 situé le plus bas, c'est-à-dire le plus près de l'ouverture d'accès 41, et sont orientés de manière à ce que le couloir 54 formé par ces reliefs 52 soit en direction du trou de réception 51. L'une des extrémités du couloir 54 aboutit à proximité du trou de réception 51, en vis-à-vis d'au moins une partie dudit trou de réception 51, tandis que l'autre extrémité est située sur le bord longitudinal de la traverse 5. Dans les figures 1 et 3, le couloir 54 est sensiblement perpendiculaire à la direction longitudinale de la traverse 5. D'autres orientations des reliefs peuvent être choisies, avec le couloir 54 formé par lesdits reliefs aboutissant en vis-à-vis du trou de réception 51. Par exemple, l'angle entre l'axe du couloir 54 et l'axe longitudinal de la traverse 5 peut être choisi entre 45 et 90 degré.

Les reliefs 52 sont formés par déformation de la matière, par exemple par emboutissage, de sorte à former une arête arrondi comme l'illustre la figure 4. En variante, les reliefs 52 peuvent être formés par d'autres moyens, comme exemple par l'ajout de matière en déposant un cordon de soudure ou de mastique durcissable sur la surface de traverse 5.

Le trou de réception 51 comporte une première partie 511, de forme allongée, comme par exemple oblongue, et une deuxième partie 512, elle-aussi de forme allongée, comme par exemple oblongue. Ces deux parties allongées 511 et 512 sont alignées suivant le même axe, dans le sens de leur longueur, de préférence parallèlement à l'axe longitudinal de la traverse 5. Le trou de réception 51 est donc de forme allongée. La largeur de la première partie 511 est plus grande que celle de la deuxième partie 512, la largeur étant la dimension suivant une direction perpendiculaire à la direction longitudinale du trou de réception 51. La première partie 511 et la deuxième partie 512 sont reliées entre-elle, c'est-à-dire qu'un objet inséré dans la deuxième partie 512 peut se déplacer vers la première partie 511 et rentrer dans cette première partie 511.

A l'intersection entre les deux parties 511 et 512 du trou de réception 51, les bords dudit trou de réception 51 comporte de chaque côté des excroissances qui réduisent localement la largeur dudit trou 51 a une dimension inférieure à la largeur de la deuxième partie 512.

L'interface de fixation du connecteur 9 coopère avec le trou 51. Elle comporte un corps longiligne, par exemple cylindrique de section circulaire ou carré, dont la section est de largeur légèrement inférieure à celle de la deuxième partie 512. L'interface de fixation comporte en outre à l'une des extrémités du corps longiligne une platine de retenue et à l'autre extrémité une platine de connexion, recevant l'extrémité libre du faisceau 7 et comportant une interface permettant la connexion du faisceau 7 à un autre faisceau du réseau électrique ou électronique du véhicule situé dans la porte 1.

La platine de retenue est de largeur supérieure à la largeur de la deuxième partie 512 du trou de réception 51, mais de largeur inférieure à la celle de la première partie 511. La platine de connexion est de largeur supérieure à celle de la première partie 511. La longueur du corps longiligne entre la platine de retenue et la platine de connexion est au moins égale à l'épaisseur de la traverse 5 autour du trou de réception 5, et sa largeur est légèrement supérieure à la largeur du trou de réception 51 entre les deux excroissances situées entre la première partie 511 et la deuxième partie 512 du trou de réception 51. La platine de connexion, le corps longiligne et la platine de retenue peuvent être par exemple de section circulaire et alignés sur un même axe. La platine de retenue peut donc passer au travers de la première partie 511 mais pas au travers de la deuxième partie 512.

Pour fixer le connecteur 9 à la traverse 5, il suffit de faire passer la platine de retenue au travers de la première partie 511 du trou de réception 51 en rentrant dans ledit trou de réception 51 du côté de la face extérieure de la traverse 5, jusqu'à ce que la platine de connexion du connecteur 9 s'appuie contre ladite face extérieure de la traverse 5 et que la platine de retenue se retrouve du côté de la face intérieure de la traverse 5, puis de translater le connecteur 9 de sorte à faire passer son interface de fixation dans la deuxième partie 512 du trou de réception 51. Le connecteur 9 est ainsi maintenu en prenant en sandwich la traverse 5 autour de la deuxième partie 512 du trou de réception 51, entre la platine de retenue et la platine de connexion. La fixation s'apparente à une fixation de type boutonnière. Les excroissances situées entre la première partie 511 et la deuxième partie 512 du trou de réception 51 évitent à l'interface de fixation de revenir vers la première partie 511 du trou de réception 51.

De préférence, au moins la première partie 511 du trou de réception 51 est située en vis-à-vis de l'extrémité du couloir 54, dans l'axe dudit couloir 54, la deuxième partie 512 pouvant être décalée par rapport à cet axe. Cette disposition permet à l'opérateur d'insérer rapidement et facilement l'interface de fixation dans la première partie 511 du trou de réception 51 sans avoir besoin de le voir. En effet, les deux reliefs 52 guident le connecteur 9, la platine de retenue glissant entre les deux 52 reliefs et contre la face extérieur de la traverse 5, jusqu'à arriver au-dessus de la première partie 511 du trou de réception 51. En ressentant le trou de réception 51 à l'aide de la main tenant le connecteur 9, l'opérateur insère l'interface de fixation du connecteur 9 dans la première partie 511 dudit trou de réception 51, puis translate le connecteur 9 pour déplacer son interface de fixation dans la deuxième partie 512 et obtenir la fixation. L'élévation de l'effort pour passer la partie du trou de réception 51 comportant les deux excroissances entre la première partie 511 et la deuxième partie 512, permet aussi de renseigner l'opérateur qu'il passe dans la deuxième partie 512 du trou de réception 51.

En variante, la traverse 5 peut être de section non plane, comme par exemple être sous la forme d'un tube de section carré, les reliefs 52 étant sur l'une des faces du tube et s'étendant au moins sur l'un des bords de cette face.

En autre variante, la traverse 5 peut être du côté extérieur du caisson 3. Elle peut être située aussi le long d'un autre bord du caisson 3 que le bord supérieur, ou en travers du caisson 3.

En autre variante, la traverse 5 forme une partie du cadre 21 de fenêtre qui s'étend à l'intérieur du caisson 3, le long du bord supérieur du panneau intérieur 4. Les deux montants latéraux du cadre 21 de fenêtre, dont le montant 22 comportant l'antenne 6, sont donc reliés à la traverse 5. Par exemple, le cadre 21 de fenêtre est réalisé d'un seule pièce. Un tel cadre de fenêtre permet de rigidifier la porte 1 dans la partie fenêtre 2, ainsi que la jonction entre la partie fenêtre 2 et le caisson 3 au niveau des montants latéraux.

## Revendications

1. Porte (1) de véhicule comportant une partie fenêtre (2) située au-dessus d'une partie caisson (3), dans laquelle la porte (1) comporte dans la partie fenêtre (2) un cadre (21) avec deux montants latéraux, une antenne (6) de réception d'ondes électromagnétiques fixée sur l'un des montants latéraux (22) et alimentée par un faisceau électrique (7), caractéristé en ce que un panneau extérieur (8) et un panneau intérieur (4) forment ledit caisson (3), en ce que la porte comprend une traverse (5) dans le caisson (3), ladite traverse (5) comportant un trou de réception (51) pour fixer un équipement et deux reliefs (52) longilignes formant un couloir (54) de guidage entre eux, au moins une partie du trou de réception (51) étant dans l'alignement dudit couloir (54) de guidage, le panneau intérieur (4) comprenant en outre une ouverture d'accès (41) pour accéder à l'intérieur du caisson (3), de préférence décalée par rapport à la traverse (5), et en ce que le faisceau (7) comporte un connecteur (9) fixé à la traverse (5) par une interface de fixation coopérant avec le trou de réception (51).

2. Porte (1) suivant la revendication 1 **caractérisée en ce que** les deux reliefs (52) s'étendent depuis l'un des bords longitudinaux de ladite traverse (5) de sorte que l'une des extrémités du couloir (54) est sur ledit bord longitudinal, l'autre extrémité étant en vis-à-vis du trou de réception (51).

3. Porte (1) suivant l'une des revendications précédentes **caractérisée en ce que** le trou de réception (51) est de forme allongée dans une direction longitudinale et comporte une première partie (551) et une deuxième partie (552) alignées suivant ladite direction longitudinale du trou de réception (51), communiquant entre-elles de sorte à former un unique trou, la première partie (511) étant plus large que la deuxième partie (512), la largeur étant la dimension dans une direction perpendiculaire à la direction longitudinale du trou de réception (51).

4. Porte (1) suivant la revendication 3 **caractérisée en ce que** la direction longitudinale du trou de réception (51) est sensiblement parallèle à l'axe longitudinal de la traverse (5).

5. Porte (1) suivant l'une des revendications 3 ou 4 **caractérisée en ce que** la largeur du trou de réception (51) à l'intersection entre la première partie (511) et la deuxième partie (512) dudit trou de réception (51) est de largeur inférieure à la largeur de ladite deuxième partie (512) du trou de réception (51), la largeur étant la dimension du trou dans une direction perpendiculaire à la direction longitudinale du trou de réception (51).

6. Porte (1) suivant l'une des revendications de 1 à 5 **caractérisée en ce que** la traverse (5) s'étend d'un bord latéral à l'autre du caisson (3).

7. Porte (1) suivant la revendication 6 **caractérisée en ce que** la traverse (5) est le long du bord dudit caisson (3), dit bord supérieur, situé le long de la partie fenêtre (2), et l'ouverture d'accès (41) est située plus bas que la traverse (5), suivant la direction verticale en se plaçant dans le référentiel du véhicule lorsque la porte (1) est installée sur un véhicule, et est agencée de sorte que le bras d'un opérateur puisse rentrer dans le caisson (3) pour atteindre le trou (51) de fixation.

8. Véhicule comportant une porte suivant l'une des revendications de 1 à 7.

## Patentansprüche

1. Fahrzeugtür (1) mit einem Fensterteil (2), das über einem Kastenteil (3) angeordnet ist, wobei die Tür (1) im Fensterteil (2) einen Rahmen (21) mit zwei Seitenholmen aufweist, wobei eine Antenne (6) zur Aufnahme elektromagnetischer Wellen an einem der Seitenholme (22) befestigt und mit einem elektrischen Strahl (7) versorgt ist, **dadurch gekennzeichnet, dass** eine Außenplatte (8) (3) und eine innere Platte (4) bilden den Kasten (3), **dadurch gekennzeichnet, dass** die Tür einen Steg (5) in dem Kasten (3) aufweist, wobei der Steg (5) ein Aufnahmeloch (51) zur Befestigung einer Ausrüstung und zwei seitliche Rippen (52) aufweist, die einen Führungskanal (54) zwischen sich bilden, wobei zumindest ein Teil des Aufnahmelochs (51) in Ausrichtung mit dem Bezug ist Führungsbahn (54), wobei die innere Platte (4) ferner eine Zugangsöffnung (41) zum Zugang in das Innere des Kastens (3), vorzugsweise versetzt zu dem Querträger (5), aufweist, und wobei der Strahl (7) einen Verbinder (9) aufweist, der an dem Querträger (5) durch eine mit dem Aufnahmeloch (51) zusammenwirkende Befestigungsschnittstelle befestigt ist.

2. Tür (1) nach Anspruch 1, **dadurch gekennzeichnet, dass** sich die beiden Erhebungen (52) von einer der Längskanten der Traverse (5) erstrecken, sodass eines der Enden der Bahn (54) an der Längskante liegt, wobei das andere Ende der Aufnahmebohrung (51) gegenüberliegt.

3. Tür (1) nach einem der vorhergehenden Ansprüche, **dadurch gekennzeichnet, dass** das Aufnahmeloch (51) in einer Längsrichtung länglich ist und einen ersten Abschnitt (551) und einen zweiten Abschnitt (552) aufweist, die entlang der Längsrichtung des Aufnahmelochs (51) ausgerichtet sind und miteinander in Verbindung stehen, um ein einziges Loch zu bilden, wobei der erste Abschnitt (5111) breiter ist als der zweite Teil (512), wobei die Breite die Abmessung in einer Richtung senkrecht zur Längsrichtung der Aufnahmeöffnung (51) ist.

4. Tür (1) nach Anspruch 3, **dadurch gekennzeichnet, dass** die Längsrichtung der Aufnahmeöffnung (51) im Wesentlichen parallel zur Längsachse der Traverse (5) verläuft.

5. Tür (1) nach einem der Ansprüche 3 oder 4, **dadurch gekennzeichnet, dass** die Breite des Aufnahmeloches (51) am Schnittpunkt zwischen dem ersten Teil (511) und dem zweiten Teil (512) des Aufnahmelochs (51) kleiner ist als die Breite des zweiten Teils (512) des Aufnahmelochs (51), wobei die Breite die Abmessung ist der Bohrung in einer zur Längsrichtung der Aufnahmeöffnung (51) senkrechten Richtung.

6. Tür (1) nach einem der Ansprüche 1 bis 5, **dadurch gekennzeichnet, dass** sich der Querträger (5) von einem Seitenrand zum anderen des Kastens (3) erstreckt.

7. Tür (1) nach Anspruch 6, **dadurch gekennzeichnet, dass** der Querträger (5) entlang des Randes des Kastens (3), der so genannten oberen Kante, entlang des Fensterteils (2) angeordnet ist, und dass die Zugangsöffnung (41) in vertikaler Richtung unter dem Querträger (5) angeordnet ist, indem sie sich in die Fahrzeugbezugsebene bewegt, wenn die Tür (1) an einem Fahrzeug angebracht ist, und angeordnet ist so, dass der Arm eines Bedieners in den Kasten (3) eindringen kann, um das Befestigungsloch (51) zu erreichen.

8. Fahrzeug mit einer Tür nach einem der Ansprüche 1 bis 7.

## Claims

1. Vehicle door (1) having a window part (2) located above a box part (3), in which door (1) contains in the window part (2) a frame (21) with two side posts, an antenna (6) for receiving electromagnetic waves attached to one of the side posts (22) and powered by an electric beam (7) **characterized in that** case by outer panel (8) and an inner panel (4) form the said box (3), **in that** the door includes a cross (5) in the box (3), the said cross (5) having a receiving hole (51) to secure equipment and two reliefs (52) longilines forming a guide corridor (54) between them, at least part of the receiving hole (51) being in the alignment of the said corridor (54) of guidance, the inner panel (4), which also includes an access opening (41) to access the inside of the aisle (3), preferably offset from the crossover (5), and the harness (7) has a connector (9) attached to the crossover (5) by a fastening interface cooperating with the reception hole (51).

2. Gate (1) in accordance with Claim 1 characterized that the two reliefs (52) extend from one of the longitudinal edges of the said crossing (5) so that one end of the corridor (54) is on the said longitudinal edge, the other end being opposite the reception hole (51).

3. Gate (1) following one of the preceding claims **characterized by** the fact that the receiving hole (51) is elongated in a longitudinal direction and has a first part (551) and a second part (552) aligned in that longitudinal direction of the receiving hole (51), communicating with each other so as to form a single hole, the first part (511) being more wide than the second part (512), the width being the dimension in a direction perpendicular to the longitudinal direction of the receiving hole (51).

4. Gate (1) following Claim 3 **characterized in that** the longitudinal direction of the receiving hole (51) is substantially parallel to the longitudinal axis of the crossing (5).

5. Gate (1) following one of the claims 3 or 4 **characterized in that** the width of the receiving hole (51) at the intersection between the first part (511) and the second part (512) of the said receiving hole (51) is less than the width of the said second part (512) of the receiving hole (51), the width being the size of the receiving hole hole in a direction perpendicular to the longitudinal direction of the receiving hole (51).

6. Gate (1) following one of the claims of 1 to 5 characterized as the cross (5) extends from one side edge to the other of the box (3).

7. Gate (1) following claim 6 characterized as the cross (5) is along the edge of the said box (3), said upper edge, located along the window part (2), and the access opening (41) is located lower than the cross (5), following the vertical direction by placing itself in the vehicle's repository when the door (1) is installed on a vehicle, and is laid out of so that the arm of an operator can enter the box (3) to reach the hole (51) of attachment.

8. Vehicle with door following one of the claims from 1 to 7.
